(19) Europäisches Patentamt
European Patent Office
Office européen des brevets

(11) **EP 4 711 714 A1**

(12) **EUROPEAN PATENT APPLICATION**

(43) Date of publication:
**18.03.2026 Bulletin 2026/12**

(21) Application number: **25187144.8**

(22) Date of filing: **03.07.2025**

(51) International Patent Classification (IPC):
**G01C 21/16** (2006.01)   **G01C 21/28** (2006.01)
**B62D 15/02** (2006.01)   **B62D 1/02** (2006.01)

(52) Cooperative Patent Classification (CPC):
**B62D 15/0285; G01C 21/165; G01C 21/28;
G01C 21/30;** B62D 1/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.09.2024 KR 20240125754**

(71) Applicant: **Hyundai Mobis Co., Ltd.
Gangnam-gu
Seoul 06141 (KR)**

(72) Inventors:
• **SHIM, Yeon Joo
16891 Yongin-si, Gyeonggi-do (KR)**
• **YU, Ji Sang
16891 Yongin-si, Gyeonggi-do (KR)**
• **KIM, Seung Hyun
16891 Yongin-si, Gyeonggi-do (KR)**

(74) Representative: **Jung, Minkyu
Wuesthoff & Wuesthoff
Patentanwälte und Rechtsanwalt PartG mbB
Schweigerstraße 2
81541 München (DE)**

(54) **METHOD AND DEVICE FOR MEMORY REVERSING DRIVING ASSISTANCE**

(57)     A memory reverse driving assistance method and device are provided. The driving assistance method and device includes storing a driving path of a vehicle based on forward driving of the vehicle, in response to that the vehicle drives backward, correcting a position of the vehicle based on at least one of sensor information measured by an internal sensor of the vehicle, global positioning system (GPS) information of the vehicle, or feature information obtained through image information of the vehicle, and assisting backward driving of the vehicle based on the stored driving path and the corrected position of the vehicle.

EP 4 711 714 A1

**Description**

## BACKGROUND OF THE DISCLOSURE

### Field of the Disclosure

The present disclosure relates to a method and device for driving assistance of a vehicle, and more particularly, to a method and device for reversing driving assistance based on information obtained during forward driving.

### Discussion of the Related Art

The material described in this section merely provides background information for the present embodiment and does not constitute related art.

When a driver has to drive on a narrow road or on an obstacle, modern vehicles may calculate the amount of free space around the vehicles and generate an evasion route by using sensors. The vehicle supports a rear autonomous driving function. The vehicle may store a path along which a driver has driven forward for a certain distance. The vehicle generates a reverse path based on the stored path and performs reverse autonomous driving along the generated reverse path.

However, existing technologies estimate the location of the vehicle based on internal vehicle sensors, and thus location estimation errors may accumulate as the vehicle drives. This may make it difficult to drive backward along the forward path.

Accumulated errors may be corrected through GPS information or communication information, but it may be difficult to use this information in a narrow road or an underground parking lot. To compensate for this, a rear driving assistance method based on visual simultaneous localization and mapping (V-SLAM) has been proposed, but further reducing the amount of computation may be advantageous in terms of cost.

## SUMMARY OF THE DISCLOSURE

An object of the present disclosure is to provide a driving assistance method and device that are improved compared to the existing method and device.

A reverse driving assistance system of a vehicle assists backward driving based on a map stored during forward driving. To prevent accumulation of position estimation errors during backward driving, a method and device for performing position correction based on map information obtained in advance during forward driving and feature information obtained in real time during backward driving are provided.

The reverse driving assistance system of the vehicle stores a driving path of the vehicle while forward driving and assists backward driving based on the stored driving path. To store a more accurate driving path, a method and device for compensating for global positioning system (GPS) information of the vehicle in terms of delay time are provided by utilizing stored sensor information.

The objects to implement in embodiments are not limited to the technical objects described above and other objects that are not stated herein will be clearly understood by those skilled in the art from the following specifications.

The present disclosure provides a driving assistance method and device.

According to an aspect of the present disclosure, a driving assistance method includes storing a driving path of a vehicle based on forward driving of the vehicle, in response to the vehicle driving backward, correcting a position of the vehicle based on at least one of sensor information measured by an internal sensor of the vehicle, global positioning system (GPS) information of the vehicle, or feature information obtained through image information of the vehicle, and assisting backward driving of the vehicle based on the stored driving path and the corrected position of the vehicle.

According to another aspect of the present disclosure, a driving assistance device includes at least one processor, and at least one memory operably connected to the at least one processor and storing instructions that, when executed, cause the at least one processor to perform a specific operation, wherein the specific operation includes storing a driving path of the vehicle based on forward driving of the vehicle, in response to that the vehicle drives backward, correcting a position of the vehicle based on at least one of sensor information measured by an internal sensor of the vehicle, global positioning system (GPS) information of the vehicle, or feature information obtained through image information of the vehicle, and assisting backward driving of the vehicle based on the stored driving path and the corrected position of the vehicle.

According to another aspect of the present disclosure, a computer-readable non-volatile storage medium comprising at least one computer program that causes at least one processor to perform an operation is provided, the operation including storing a driving path of a vehicle based on forward driving of the vehicle, when the vehicle drives backward, correcting a position of the vehicle based on at least one of sensor information measured by an internal sensor of the vehicle, global positioning system (GPS) information of the vehicle, or feature information obtained through image information of the vehicle, and assisting backward driving of the vehicle based on the stored driving path and the corrected position of the vehicle.

In the method and devices, the correcting of the position of the vehicle or the correcting may include, based on input state information, applying a first weight to the sensor information, a second weight to the GPS information, and a third weight to the feature information, and correcting the position of the vehicle based on the first weight, the second weight, and the third weight.

In the method and devices, the first weight may be determined based on a degree of matching between the sensor information and position information of the vehicle, the second weight may be determined based on a degree of matching between the GPS information and the position information of the vehicle, and the third weight may be determined based on a degree of matching between the feature information and the position information of the vehicle.

In the method and devices, the method may further include extracting local map information within a certain range from a current position of the vehicle from an entire map information stored based on forward driving of the vehicle, wherein the correcting of the position of the vehicle or the correcting may include calculating a position correction value of the vehicle based on points of the feature information and points of the local map information and correcting a position of the vehicle based on the position correction value.

In the method and devices, the entire map information may include first map information generated based on a front camera of the vehicle, second map information generated based on a rear camera of the vehicle, third map information generated based on a left camera of the vehicle, and fourth map information generated based on a right camera of the vehicle.

In the method and devices, the local map information may be sequentially extracted for the first map information, the second map information, the third map information, and the fourth map information.

In the method and devices, the calculating of the position correction value may include calculating a first position correction value based on points of first feature information obtained based on the front camera and points of first local map information extracted from the first map information, calculating a second position correction value based on points of second feature information obtained based on the rear camera and points of second local map information extracted from the second map information, calculating a third position correction value based on points of third feature information obtained based on the left camera and points of third local map information extracted from the third map information, and calculating a fourth position correction value based on points of fourth feature information obtained based on the right camera and points of fourth local map information extracted from the fourth map information.

In the method and devices, the entire map information may include information about all trajectory indices stored based on forward driving of the vehicle and information about all points mapped to all of the trajectory indices, and the extracting of the local map information may include extracting information about points mapped to trajectory indices having a value within the certain range from a value of a trajectory index corresponding to the current location from the entire map information.

In the method and devices, the driving path may be generated based on a position of the vehicle, which is measured based on at least one of sensor information during forward driving, measured by an internal sensor of the vehicle, or forward GPS information of the vehicle.

In the method and devices, the method may further include calculating a position coordinate value of the vehicle, corresponding to a delay time, based on forward driving of the vehicle, and compensating for at least one of the forward GPS information or the feature information based on the position coordinate value of the vehicle, wherein the driving path may be generated based on the compensated forward GPS information.

The aspects of the present disclosure are only some of the exemplary embodiments of the present disclosure, and various embodiments reflecting the technical features of the present disclosure may be derived and understood by those skilled in the art based on the detailed description of the present disclosure to be described below.

## BRIEF DESCRIPTION OF THE DRAWINGS

FIG. 1 is a flowchart for explaining a position correction method related to a driving assistance method according to embodiments.

FIG. 2 shows an example of the entire map generated during forward driving.

FIG. 3 illustrates the entire map stored based on forward driving.

FIG. 4 illustrates an example of a vehicle moving backward based on control of a driving assistance device.

FIG. 5 illustrates a principle of correcting a position of a vehicle based on control of a driving assistance device.

FIG 6 shows an example of a driving path with a compensated delay time.

FIG. 7 illustrates a driving assistance method according to embodiments.

FIG. 8 shows a driving assistance device according to embodiments.

## DETAILED DESCRIPTION OF THE DISCLOSURE

To make the features and advantages of the solution to the problems of the present disclosure clearer, the present disclosure will be described in more detail with reference to specific embodiments of the present disclosure illustrated in the attached drawings.

However, detailed descriptions of well-known functions or configurations that may obscure the gist of the present disclosure are omitted in the following description and attached drawings. It should be noted that identical components are represented by the same drawing symbols throughout the drawings.

The terms or words used in the following description and drawings should not be interpreted as limited to their usual or dictionary meanings, but should be interpreted as meanings and concepts that conform to the technical idea of the present disclosure, based on the principle that the inventors may appropriately define the concept of the terms to best explain their own invention. Therefore, the embodiments described in this specification and the configurations illustrated in the drawings are only the most desired embodiments of the present disclosure and do not represent all of the technical ideas of the present disclosure. Therefore, it should be understood that there may be various equivalents and modified examples that may replace them at the time of filing this application.

Unless otherwise defined, all terms used herein, including technical or scientific terms, have the same meaning as commonly understood by one of ordinary skill in the art to which the present disclosure belongs. Terms defined in commonly used dictionaries should be interpreted as having a meaning consistent with their meaning in the context of the relevant art, and will not be interpreted in an idealized or overly formal sense, unless expressly defined in this application.

Terms that include ordinal numbers, such as first and second are used to describe various components, and are only used to distinguish one component from another, and are not used to limit the components. For example, without departing from the scope of the present disclosure, the second component may be named the first component, and similarly, the first component may also be named the second component.

Terms used herein is for the purpose of describing particular embodiments only and is not intended to limit the present disclosure. Singular expressions include plural expressions unless the context clearly indicates otherwise. It should be understood that terms such as "include" or "have" used in this specification are intended to specify the presence of a feature, number, step, operation, component, part or combination thereof described in the specification, but do not exclude in advance the possibility of the presence or addition of one or more other features, numbers, steps, operations, components, parts or combinations thereof.

Terms such as "unit," "device," and "module" described in the specification mean a unit that processes at least one function or operation, which may be implemented by hardware, software, or a combination of hardware and software. Terms "a" (or "an"), "one", "the" and similar related words may be used in the context of describing the present disclosure (especially in the context of the claims below) to include both the singular and the plural, unless otherwise indicated herein or clearly contradicted by context.

In various examples of the disclosure, "/" and "," should be interpreted as indicating "and/or." For example, "A/B" may mean "A and/or B." "A, B" may mean "A and/or B." "A/B/C" may mean "at least one of A, B, and/or C." "A, B, C" may mean "at least one of A, B and/or C."

In various examples of the disclosure, "or" should be interpreted as meaning "and/or." For example, "A or B" may include "only A", "only B", and/or "both A and B." In other words, "or" should be interpreted as meaning "additionally or alternatively."

In addition to the terms described above, specific terms used in the following description are provided to help understanding of the present disclosure, and the use of these specific terms may be changed to other forms without departing from the technical spirit of the present disclosure.

Embodiments within the scope of the present disclosure include computer-readable media having or transferring computer-executable instructions or data structures stored on the computer-readable media. The computer-readable media may be any available media that are to be accessed by a general-purpose or special-purpose computer system. For example, the computer-readable media may include, but is not limited to, physical storage media such as random-access memory (RAM), read-only memory (ROM), erasable programmable read only memory (EPROM), CD-ROM or other optical disk storage, magnetic disk storage or other magnetic storage, or any other medium that may be used to store or carry program code means in the form of computer-executable instructions, computer-readable instructions or data structures, and that may be accessed by a general-purpose or special-purpose computer system.

Each block may represent a module, segment, or portion of code that contains one or more executable instructions for performing a particular logical function(s). It should be noted that in some alternative execution examples, it is possible for the functions mentioned in the blocks to occur out of order. For example, two blocks shown in succession may in fact be executed substantially simultaneously, or the blocks may sometimes be executed in reverse order, depending on their respective functions.

In describing the embodiments of the present disclosure in detail, the main subject matter claimed in this specification will be primarily targeted at examples of a specific system, but it will be apparent to those skilled in the art that the disclosure may be applied to other communication systems and services having similar technical backgrounds without significantly departing from the scope disclosed in this specification.

Hereinafter, a driving assistance method and device according to an embodiment of the present disclosure will be described in detail with reference to the drawings.

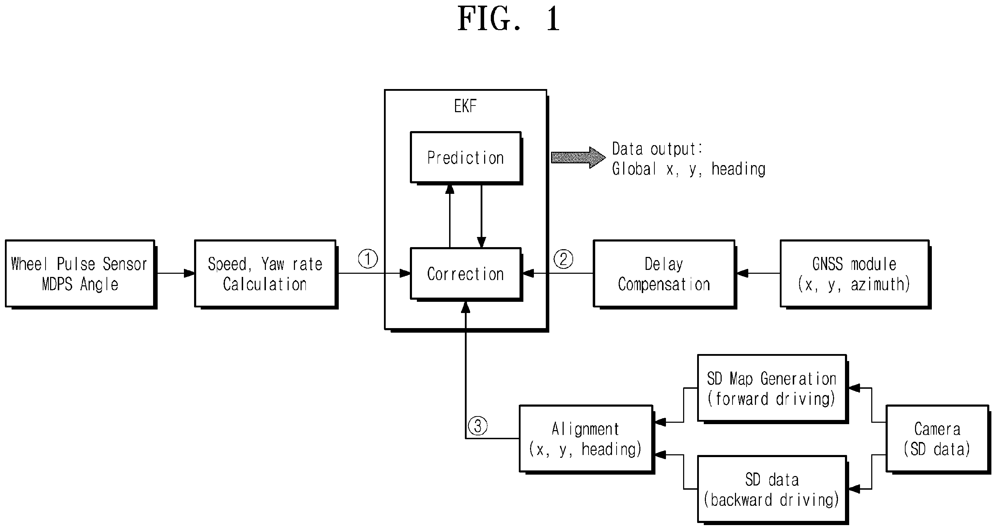

FIG. 1 is a flowchart for explaining a position correction method related to a driving assistance method according to embodiments.

Referring to FIG. 1, position correction may be performed via an extended Kalman filter (EKF). Through the EKF, a nonlinear system may be linearized to analyze and predict the current position and speed of a vehicle. In more detail, through the EKF, coordinate information (x, y) about the current position of the vehicle and information about a heading angle of the vehicle may be interpreted and predicted.

A prediction operation of the EKF is an operation of predicting the position of the corresponding vehicle based on an equation of motion of the vehicle. A correction operation is an operation of correcting the position of the vehicle based on the measurement result of a sensor.

For these operations, a driving assistance device 10 may obtain sensor information based on a sensor installed inside the vehicle. For example, the driving assistance device 10 may calculate a speed and yaw rate of the vehicle based on a wheel pulse sensor and a motor driven power steering angle (MDPS angle) sensor installed in the vehicle (①). That is, the sensor information may include information about the speed of the vehicle or information about the yaw rate of the vehicle.

The driving assistance device 10 may obtain sensor information based on a sensor installed inside the vehicle when the vehicle drives forward, or may obtain sensor information based on the sensor installed inside the vehicle when the vehicle drives backward. That is, the driving assistance device 10 may calculate the position of the vehicle based on the sensor information measured when the vehicle drives forward, or may calculate the position of the vehicle based on the sensor information measured when the vehicle drives backward.

In this case, the driving assistance device 10 may generate and store a driving path of the vehicle based on position information of the vehicle, which is calculated when the vehicle drives forward, or may correct the current position of the vehicle based on the position information of the vehicle, which is calculated when the vehicle drives backward. In other words, the driving assistance device 10 may generate a driving path of the vehicle by using the sensor information obtained when the vehicle drives, or may correct the position of the vehicle in real time when the vehicle drives backward by using the sensor information obtained when the vehicle drives backward.

The driving assistance device 10 may obtain global positioning system (GPS) information of the vehicle. For example, the driving assistance device 10 may obtain information on the two-dimensional (2D) coordinates and azimuth of the vehicle through a global navigation satellite system (GNSS) module installed in the vehicle. That is, the GPS information may include coordinate information (x, y) and information about azimuth of the position of the vehicle (②).

The driving assistance device 10 may obtain the GPS information of the vehicle (hereinafter, "forward GPS information") by the GNSS module or the like when the vehicle drives forward, or may obtain the GPS information of the vehicle by the GNSS module or the like when the vehicle drives backward. That is, the driving assistance device 10 may calculate the position of the vehicle based on the forward GPS information measured when the vehicle drives forward, or may calculate the position of the vehicle based on the GPS information measured when the vehicle drives backward.

In this case, the driving assistance device 10 may generate and store a driving path of the vehicle based on position information calculated when the vehicle drives forward, or may correct the current position of the vehicle based on the position information of the vehicle, which is calculated when the vehicle drives backward. In other words, the driving assistance device 10 may generate a driving path of the vehicle by using the GPS information obtained when the vehicle drives, or may correct the position of the vehicle in real time when the vehicle drives backward by using the GPS information obtained when the vehicle drives backward.

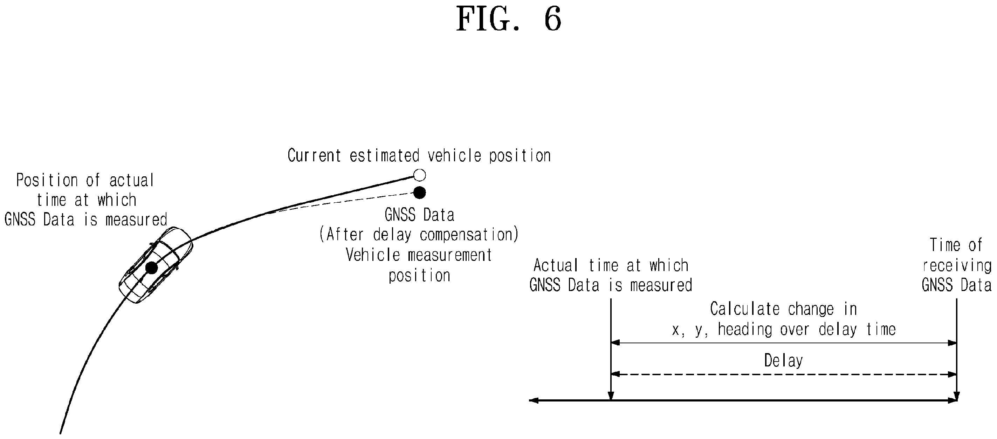

The driving assistance device 10 may perform delay compensation on information obtained through the GNSS module (②). In more detail, the driving assistance device 10 may perform delay compensation for a delayed time for information obtained through the GNSS module based on the information measured by the sensor installed inside the vehicle. This will be described in detail with reference to FIG. 6.

The driving assistance device 10 may obtain space detection (SD) data through a camera installed in the vehicle. While the vehicle drives forward, the driving assistance device 10 may generate an SD map based on the obtained SD data.

The driving assistance device 10 may obtain the SD data through the camera even while assisting backward driving. The driving assistance device 10 may perform alignment based on the SD map generated during forward driving and the SD data acquired during backward driving (③). As a result of the alignment, the position information of the vehicle may be obtained in a form including 2D coordinates in the form of {X, Y} and vehicle heading.

That is, the driving assistance device 10 may correct the position of the vehicle when the vehicle drives backward based on sensor information obtained by the internal sensor of the vehicle, the GPS information of the vehicle, and image information obtained through the camera (hereinafter, feature information). In more detail, the position of the vehicle may be corrected based on the sensor information, GPS information, and feature information obtained by the EKF. In this case, the obtained sensor information, GPS information, and feature information may be reflected with weights applied respectively during correction by EKF.

The sensor information may be assigned a first weighting value based on a degree of matching between a position of an actual vehicle and the position of the vehicle, which is measured by the sensor information. The sensor information may be given a first weighting based on presence of GPS information and feature information. The GPS information may be assigned a second weighting value based on a degree of matching between a position of an actual vehicle and the position of the vehicle, which is measured by the GPS information. The feature information may be assigned a third weighting value based on a degree of matching between a position of an actual vehicle and the position of the vehicle, which is measured by the sensor information. In this case, the first weight, the second weight, and the third weight may have various values depending on an input state information, and may be related to each other and have relative values.

That is, for example, when both the GPS information and feature information obtainable from the vehicle are uncertain, the first weight may have a relatively higher value than the second and third weights. For example, in an open area in which feature information obtained through image information is uncertain or at night when the accuracy of image information is low, the third weight may have a relatively lower value than the first and second weights.

Alternatively, for example, when it is possible to obtain all of the sensor information, the GPS information, and the feature information, the third weight, the second weight, and the first weight may have higher values in that order. That is, a weight may be assigned in the order of the sensor information, the GPS information, and the feature information that are closest to the current position of the vehicle.

Therefore, the driving assistance method and device according to the embodiments have an effect of efficiently performing position correction of the vehicle according to a surrounding environment when the vehicle drives backward.

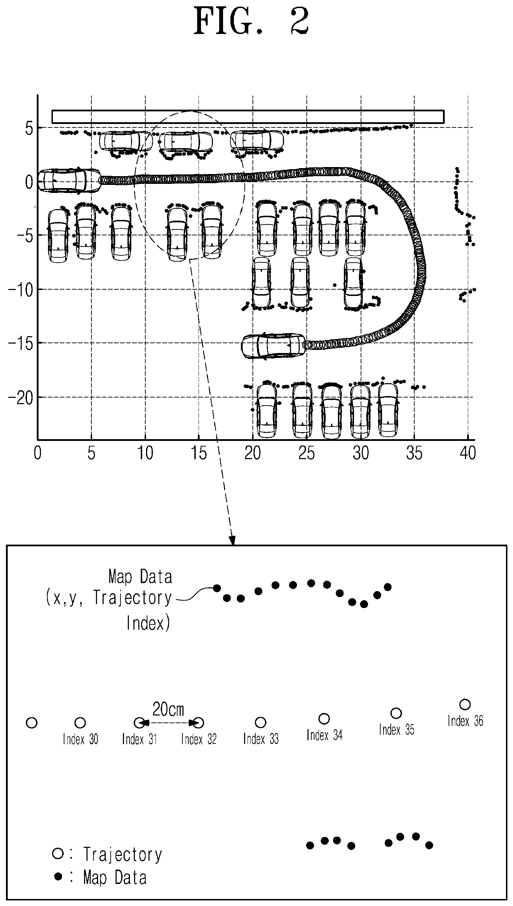

FIG. 2 shows an example of the entire map generated during forward driving.

Referring to FIG. 2, whenever a distance traveled by the vehicle is greater than or equal to (or exceeds) a certain distance, the current position coordinates of the vehicle are stored in a buffer together with a trajectory index. In FIG. 2, the certain distance is exemplified as 20 cm. The driving assistance device 10 may increase a trajectory index value by 1 each time a moving distance of the vehicle exceeds 20 cm and map the the position coordinates of the vehicle to each trajectory index and store the position coordinates in a buffer.

Referring to FIG. 2, the entire map information may include map data. Map data may contain 2D coordinate information of a feature mapped to the trajectory index. The 2D coordinates of the feature mapped to the trajectory index may be referred to as a point.

The entire map data corresponding to the entire map information includes information about the entire trajectory indices stored based on forward driving of the vehicle and information about the entire points mapped to the entire trajectory indices. For local map extraction, arrays corresponding to trajectory indices having values within a certain range from the trajectory index value corresponding to the current position of the vehicle are selected from arrays of the entire map data. Therefore, information about points mapped to trajectory indices having values within a certain range from the trajectory index value corresponding to the current position of the vehicle is extracted.

FIG. 2 shows an example in which a value of the trajectory index corresponding to the current position of a vehicle is 30 when an interval between trajectory indices is 20 cm, and the certain range is set to 5 m each in forward/backward directions. When a range of 5 m is converted into the number of trajectory indices, there are 25 for each of forward and backward directions, and thus the driving assistance device 10 extracts information on points mapped to the corresponding trajectory indices in a range from trajectory index 5 to trajectory index 55.

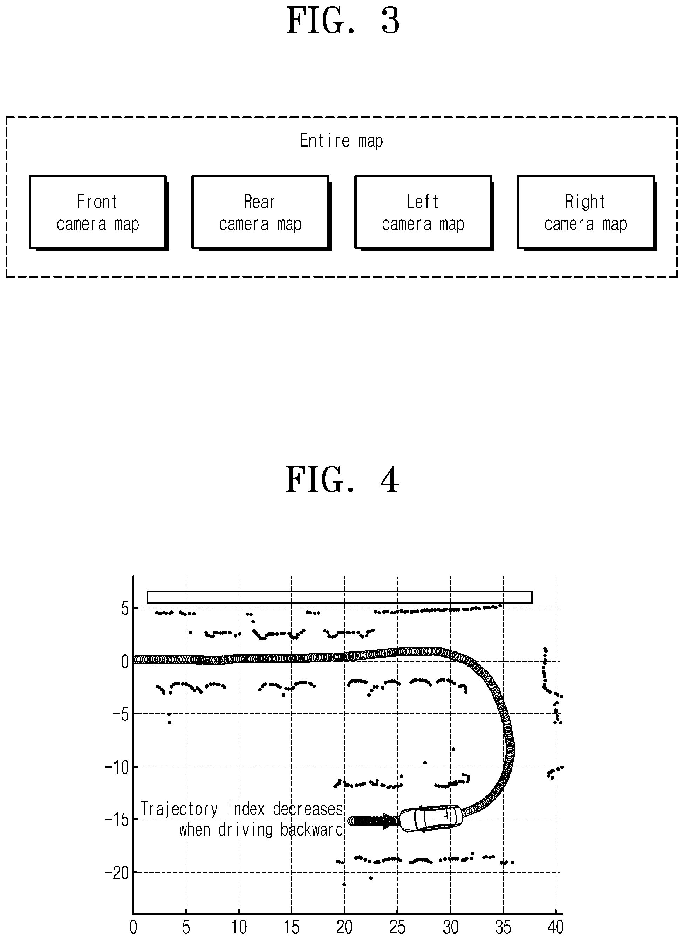

FIG. 3 illustrates the entire map stored based on forward driving.

Referring to FIG. 3, the entire map information includes front camera map information (first map information) generated based on a front camera of the vehicle, rear camera map information (second map information) generated based on a rear camera of the vehicle, left camera map information (third map information) generated based on a left camera of the vehicle, and right camera map information (fourth map information) generated based on a right camera of the vehicle.

FIG. 4 illustrates an example of a vehicle moving backward based on control of the driving assistance device 10.

Referring to FIG. 4, the driving assistance device 10 controls backward driving in a direction in which the trajectory index mapped to the position coordinates of the vehicle decreases.

The driving assistance device 10 extracts local map information within a certain range from the current position of the vehicle from the entire map information as the vehicle drives backward. The local map extraction process may be performed sequentially for the first map information, the second map information, the third map information, and the fourth map information. Local map information extracted from the first map information may be referred to as first local map information, local map information extracted from the second map information may be referred to as second local map information, local map information extracted from the third map information may be referred to as third local map information, and map information extracted from the fourth map information may be referred to as fourth local map information.

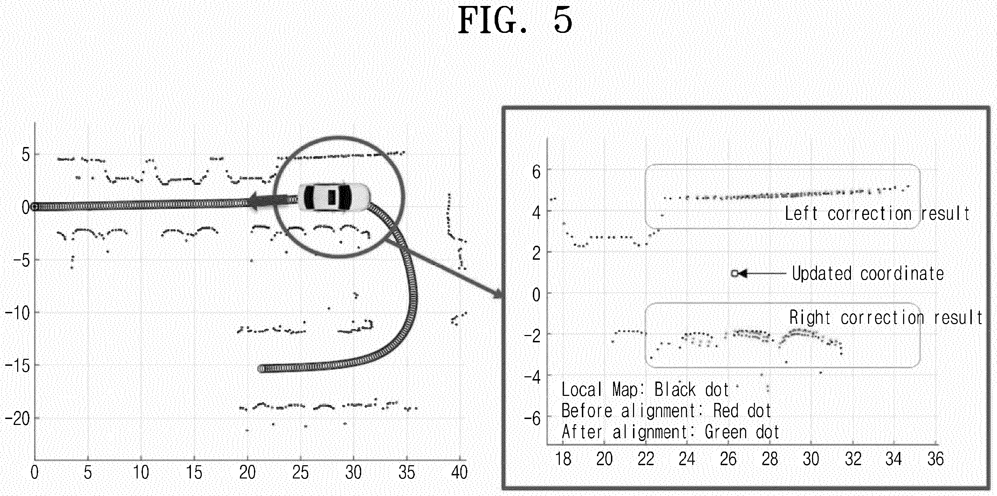

FIG. 5 illustrates a principle of correcting the position of a vehicle based on control of the driving assistance device 10.

After extracting a local map from the entire map, an alignment process may be performed to match the local maps with feature information.

The alignment process may be performed for four directions similarly to local map extraction. Accordingly, when obtaining feature information from image information collected by the camera during backward driving, the driving assistance device 10 may obtain feature information for the front camera (first feature information), feature information for the rear camera (second feature information), feature information for the left camera (third feature information), and feature information for the right camera (fourth feature information). The feature information may include, for example, SD data described through FIG. 1.

The position correction value may also be calculated for the four directions. Accordingly, the driving assistance device 10 can calculate a first position correction value based on the first feature information and the first local map information, calculate a second position correction value based on the second feature information and the second local map information, calculate a third position correction value based on the third feature information and the third local map information, and calculate a fourth position correction value based on the fourth feature information and the fourth local map information.

In the alignment process, the driving assistance device 10 matches points of the obtained feature information with points of the local map information to generate matching pairs. In this specification, feature information or points of feature information may be referred to as a source, and local map information or points of local map information may be referred to as a destination.

The driving assistance device 10 matches the points of the local map information with the closest points to each point of the feature information. Then, the driving assistance device 10 rotates and moves the points of the feature information and obtains a matrix value that may minimize a Euclidean distance value between the matching pairs.

The amount of rotation and movement of the points in the feature information represents the current localization error. The driving assistance device 10 may output a final position recognition result by adding a positioning result calculated based on the points of the feature information of a position before rotation and movement to the current positioning result value.

Referring to FIG. 5, the driving assistance device 10 derives black dots of FIG. 9 as points based on the local map information (third local map information and fourth local map information) and derives red dots of FIG. 5 as points based on the feature information (third feature information and fourth feature information). The driving assistance device 10 derives green dots as compensation coordinates for each side. The driving assistance device 10 determines update coordinates through initial error calculated based on the red dots and final error calculated based on the green dots. In particular, in this case, the update coordinates may be reflected with weights applied as described with reference to FIG. 1.

FIG 6 shows an example of a driving path with a compensated delay time.

Referring to FIGS. 1 and 6, the driving assistance device 10 may compensate for the GPS information obtained through the global navigation satellite system (GNSS) module installed in the vehicle in terms of a delay time. In this case, the compensated GPS information corresponds to the forward GPS information obtained while the vehicle drives forward.

In general, a time delay in the values measured by a GNSS module may occur due to a combination of various factors, such as a delay in propagation of a signal, a delay in processing of a satellite signal by a receiver, or a delay in data transmission in communication between a receiver and a data processing device. Therefore, a problem arises in that a time at which GNSS data is actually measured and a time at which the corresponding GNSS data is received are different. In this case, a problem occurs in which an actual path along which the vehicle drives and a stored driving path are different due to the time delay of the GNSS data.

To resolve this problem, the driving assistance device 10 may generate a driving path that is stored when the vehicle drives forward based on GNSS data in which time delay is compensated. That is, the driving assistance device 10 may generate a driving path in which an error due to time delay is corrected by generating a driving path based on the GNSS data in which time delay is compensated, and when the vehicle drives backward, the driving assistance device 10 may assist the vehicle in backward driving based on the corresponding driving path.

In more detail, the driving assistance device 10 may calculate a positioning change amount ($\Delta x_{VPE}$, $\Delta y_{VPE}$, and $\Delta \psi_{VPE}$) corresponding to a delayed time based on data measured by an internal sensor of the vehicle and compensate for the calculated positioning change amount to the GPS information or the feature information. That is, the driving assistance device 10 may compensate for the calculated positioning change amount with the result data measured from a GPS, a camera, or the like.

First, the positioning change amount corresponding to the delayed time may be calculated by Expression 1 below.

## [Expression 1]

$$\triangle x_{VPE} = \left(x_{VPE}(t) - x_{VPE}(t - \triangle t)\right) * \cos\left(\psi_{GNSS} - \psi_{VPE}(t - \triangle t)\right) - \left(y_{VPE}(t) - y_{VPE}(t - \triangle t)\right) * \sin\left(\psi_{GNSS} - \psi_{VPE}(t - \triangle t)\right)$$

$$\triangle y_{VPE} = \left(x_{VPE}(t) - x_{VPE}(t - \triangle t)\right) * \sin\left(\psi_{GNSS} - \psi_{VPE}(t - \triangle t)\right) + \left(y_{VPE}(t) - y_{VPE}(t - \triangle t)\right) * \cos\left(\psi_{GNSS} - \psi_{VPE}(t - \triangle t)\right)$$

$$\triangle\psi_{VPE} = \psi_{GNSS} - \psi_{VPE}(t - \triangle t)$$

Here, t represents a current time, and $\Delta t$ represents a delayed time.

The compensated result data may be calculated by Expression 2 below.

## [Expression 2]

$$x_{comp} = x_{GNSS} + \triangle x_{VPE}$$

$$y_{comp} = y_{GNSS} + \triangle y_{VPE}$$

$$\psi_{comp} = \psi_{GNSS} + \triangle \psi_{VPE}$$

Here, $x_{comp}$, $y_{comp}$, $\psi_{comp}$ means the compensated result data, $x_{GNSS}$, $y_{GNSS}$, $\psi_{GNSS}$ represents result data measured from the GPS or the camera, and $\triangle x_{VPE}$, $\triangle y_{VPE}$, $\triangle \psi_{VPE}$ represents a positioning change amount corresponding to a delayed time.

Therefore, the driving assistance method and device according to embodiments not only efficiently assists the vehicle in backward driving by correcting the position of the vehicle when the vehicle drives backward, but also has an effect of reducing errors in the driving path stored when the vehicle drives forward.

That is, the driving assistance method and device according to the embodiments may reduce the error of the stored driving path and at the same time reduce the error of the position of the vehicle when following the driving path, thereby having an effect of accurately measuring the position of the vehicle.

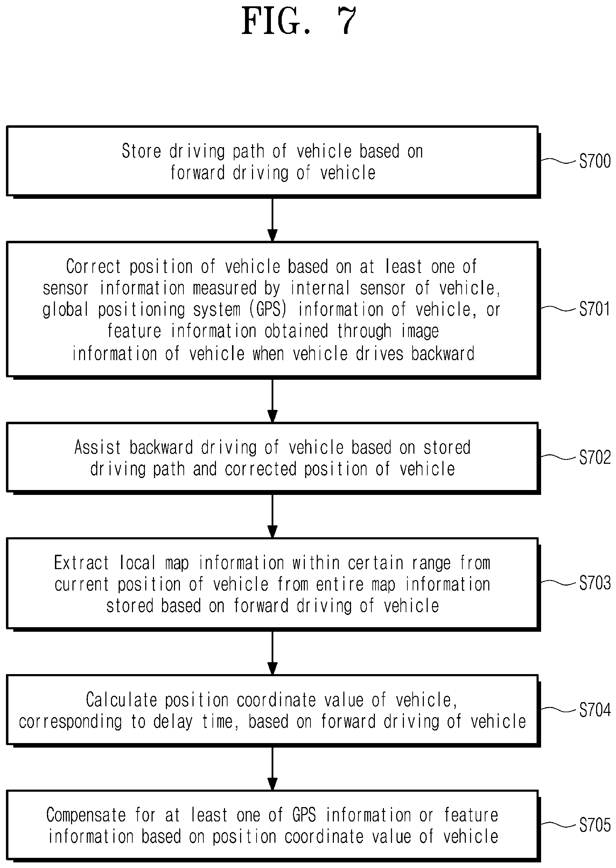

FIG. 7 illustrates a driving assistance method according to embodiments.

The driving assistance method illustrated in FIG. 7 may be configured to perform the processes described through FIGS. 1 to 6.

Referring to FIG. 7, the driving assistance method according to embodiments may include storing a driving path of a vehicle based on forward driving of the vehicle (S700), correcting a position of the vehicle based on at least one of sensor information measured by an internal sensor of the vehicle, global positioning system (GPS) information of the vehicle, or feature information obtained through image information of the vehicle when the vehicle drives backward (S701), assisting backward driving of the vehicle based on the stored driving path and the corrected position of the vehicle (S702), extracting local map information within a certain range from a current position of the vehicle from entire map information stored based on forward driving of the vehicle (S703), calculating a position coordinate value of the vehicle, corresponding to a delay time, based on forward driving of the vehicle (S704), and compensating for at least one of the GPS information or the feature information based on the position coordinate value of the vehicle (S705).

In operation S701, a first weight may be assigned to sensor information, a second weight may be assigned to the GPS information, and a third weight may be assigned to the feature information based on the input state information, and the position of the vehicle may be corrected based on the first weight, the second weight, and the third weight. In this case, the first weight may be determined based on a degree of matching between the sensor information and the position information of the vehicle, the second weight may be determined based on a degree of matching between the GPS information and the position information of the vehicle, and the third weight may be determined based on a degree of matching between the feature information and the location information of the vehicle.

Therefore, the driving assistance method and device according to the embodiments have an effect of efficiently performing position correction of the vehicle according to a surrounding environment when the vehicle drives backward.

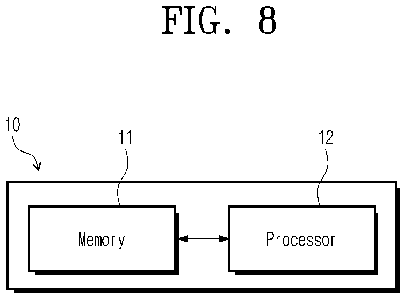

FIG. 8 shows the driving assistance device 10 according to embodiments.

Referring to FIG. 8, the driving assistance device 10 according to an embodiment of the present disclosure may include one or more memories 11 and one or more processors 12.

The processor 12 may controls the memory 11 and may be configured to implement the descriptions, functions, procedures, proposals, methods and/or operating flowcharts disclosed in this specification. In particular, the processor 12 may be configured to perform the processes described through FIGS. 1 to 7.

The memory 11 may be connected to the processor 12 and may store various information related to the operation of the processor 12. For example, the memory 11 may store software code including instructions for performing some or all of the processes controlled by the processor 12 or performing the descriptions, functions, procedures, proposals, methods and/or operating flowcharts disclosed herein. In particular, the memory 11 may be used to store the driving path, sensor information, GPS information, entire map information, local map information, and feature information according to an embodiment of the present disclosure.

The driving assistance device 10 of FIG. 8 may be included inside the vehicle or configured as a part of the vehicle. Alternatively, the driving assistance device 10 may be configured as an independent device separate from the vehicle and may be connected to the vehicle and operated via a wired/wireless interface.

According to an embodiment of the present disclosure, there is an advantage in that a method and device may be provided that reduces an amount of computation while increasing the accuracy of vehicle position estimation during backward driving assistance by correcting a driving path during backward driving assistance.

The effects obtainable in the present disclosure are not limited to the effects mentioned above, and other effects not mentioned are clearly understood by those skilled in the art from the description below.

While this specification contains details of many specific implementations, as described above, these should not be construed as limitations on the scope of any invention or claims, but rather as descriptions of features that may be unique to particular embodiments of particular inventions. Certain features described in this specification in the context of separate embodiments may also be implemented in combination in a single embodiment. On the other hand, various features described in the context of a single embodiment may also be implemented in multiple embodiments, either individually or in any suitable sub-combination. Furthermore, although features may operate in a particular combination and may initially be described as being claimed as such, one or more features from a claimed combination may in some cases be excluded from that combination, and the claimed combination may be modified into a sub-combination or variation of a sub-combination.

Likewise, although operations are depicted in the drawings in a particular order, this should not be construed as requiring that those operations be performed in the particular order illustrated or in any sequential order to achieve a desirable result, or that all of the illustrated operations be performed. In certain cases, multitasking and parallel processing may be advantageous. Furthermore, separation of various system components of the embodiments described above should not be construed as requiring such separation in all embodiments, and it should be understood that the described program components and systems may generally be integrated together in a single software product or packaged into multiple software products.

Specific embodiments of the subject matter described herein have been described. Other embodiments are within the scope of the following claims. For example, the operations recited in the claims may be performed in a different order and still achieve the desired result. For example, the processes illustrated in the attached drawings do not necessarily require the particular illustrated order or sequential order to achieve a desirable result. In certain implementations, multitasking and parallel processing may be advantageous.

The present description proposes the best mode of the present disclosure and provides examples to illustrate the present disclosure and to enable a person skilled in the art to make and use the present disclosure. The specification written as such is not intended to limit the present disclosure to the stated specific terms. Accordingly, although the present disclosure has been described in detail with reference to the examples described above, it will be apparent to those skilled in the art that modifications, changes and variations may be made to the examples without departing from the scope of the present disclosure.

Therefore, the scope of the present disclosure should not be determined by the described embodiments but by the claims.

**Claims**

1. A driving assistance method comprising:

   storing a driving path of a vehicle based on forward driving of the vehicle;
   in response to the vehicle driving backward, correcting a position of the vehicle based on at least one of sensor information measured by an internal sensor of the vehicle, global positioning system (GPS) information of the vehicle, or feature information obtained through image information of the vehicle; and
   assisting backward driving of the vehicle based on the stored driving path and the corrected position of the vehicle.

2. The driving assistance method of claim 1, further comprising:

   based on state of at least one of the sensor information, the GPS information or the feature information, applying a first weight to the sensor information, a second weight to the GPS information, and a third weight to the feature information; and

correcting the position of the vehicle based on the first weight, the second weight, and the third weight.

3. The driving assistance method of claim 2, wherein the first weight is determined based on a degree of matching between the sensor information and position information of the vehicle,

wherein the second weight is determined based on a degree of matching between the GPS information and the position information of the vehicle, and
wherein the third weight is determined based on a degree of matching between the feature information and the position information of the vehicle.

4. The driving assistance method of any one of claims 1 to 3, further comprising:

extracting local map information within a certain range from a current position of the vehicle from an entire map information stored based on forward driving of the vehicle,
wherein the correcting of the position of the vehicle includes:

calculating a position correction value of the vehicle based on points of the feature information and points of the local map information; and
correcting a position of the vehicle based on the position correction value.

5. The driving assistance method of claim 4, wherein the entire map information includes:

first map information generated based on a front camera of the vehicle;
second map information generated based on a rear camera of the vehicle;
third map information generated based on a left camera of the vehicle; and
fourth map information generated based on a right camera of the vehicle.

6. The driving assistance method of claim 5, further comprising:
sequentially extracting the local map information from the first map information, the second map information, the third map information, and the fourth map information.

7. The driving assistance method of claim 5 or 6, wherein the calculating of the position correction value includes:

calculating a first position correction value based on points of first feature information obtained based on the front camera and points of first local map information extracted from the first map information;
calculating a second position correction value based on points of second feature information obtained based on the rear camera and points of second local map information extracted from the second map information;
calculating a third position correction value based on points of third feature information obtained based on the left camera and points of third local map information extracted from the third map information; and
calculating a fourth position correction value based on points of fourth feature information obtained based on the right camera and points of fourth local map information extracted from the fourth map information.

8. The driving assistance method of any one of claims 4 to 7, wherein the entire map information includes information about all trajectory indices stored based on forward driving of the vehicle and information about all points mapped to all of the trajectory indices, and
wherein the extracting of the local map information includes extracting information about points mapped to trajectory indices having a value within the certain range from a value of a trajectory index corresponding to the current location from the entire map information.

9. The driving assistance method of any one of claims 1 to 8, wherein the driving path is generated based on a position of the vehicle, and
wherein the position of the vehicle is measured based on at least one of sensor information during forward driving, measured by an internal sensor of the vehicle, or GPS information of the vehicle during forward driving.

10. The driving assistance method of any one of claims 1 to 9, further comprising:

calculating a position coordinate value of the vehicle corresponding to a delay time, based on forward driving of the vehicle; and

compensating for at least one of the GPS information of the vehicle during forward driving or the feature information based on the position coordinate value of the vehicle,
wherein the driving path is generated based on the compensated GPS information.

11. A driving assistance device comprising:

at least one processor; and
at least one memory operably connected to the at least one processor and storing instructions,
wherein the at least one processor, upon execution of the instructions, is configured to:
store a driving path of the vehicle based on forward driving of the vehicle;
in response to that the vehicle drives backward;

correct a position of the vehicle based on at least one of sensor information measured by an internal sensor of the vehicle, global positioning system (GPS) information of the vehicle, or feature information obtained through image information of the vehicle; and
assist backward driving of the vehicle based on the stored driving path and the corrected position of the vehicle.

12. The driving assistance device of claim 11, wherein the at least one processor is further configured to:

based on state of at least one of the sensor information, the GPS information or the feature information, apply a first weight to the sensor information, a second weight to the GPS information, and a third weight to the feature information; and
correct the position of the vehicle based on the first weight, the second weight, and the third weight.

13. The driving assistance device of claim 12, wherein the first weight is determined based on a degree of matching between the sensor information and position information of the vehicle,

wherein the second weight is determined based on a degree of matching between the GPS information and the position information of the vehicle, and
wherein the third weight is determined based on a degree of matching between the feature information and the position information of the vehicle.

14. The driving assistance device of any one of claims 11 to 13, wherein the at least one processor is further configured to: generate the driving path based on a position of the vehicle, which is measured based on at least one of sensor information during forward driving, measured by an internal sensor of the vehicle, or GPS information of the vehicle during forward driving.

15. A computer-readable non-volatile storage medium comprising at least one computer program that causes at least one processor to perform the method according to any one of claims 1 to 10.

# FIG. 1

EP 4 711 714 A1

EKF

Prediction

→ Data output:
Global x, y, heading

Wheel Pulse Sensor
MDPS Angle → Speed, Yaw rate
Calculation → ① → Correction ← ② ← Delay
Compensation ← GNSS module
(x, y, azimuth)

③ → Alignment
(x, y, heading) ← SD Map Generation
(forward driving) ← Camera
(SD data)

Alignment
(x, y, heading) ← SD data
(backward driving) ← Camera
(SD data)

# FIG. 2

Map Data
(x,y, Trajectory
Index)

20cm

○
Index 30

○
Index 31

○
Index 32

○
Index 33

○
Index 34

○
Index 35

○
Index 36

○: Trajectory
●: Map Data

# FIG. 3

# FIG. 4

# FIG. 5

Left correction result

Updated coordinate

Right correction result

Local Map: Black dot
Before alignment: Red dot
After alignment: Green dot

EP 4 711 714 A1

# FIG. 6

Current estimated vehicle position

Position of actual
time at which
GNSS Data is measured

GNSS Data
(After delay compensation)
Vehicle measurement
position

Actual time at which
GNSS Data is measured

Time of
receiving
GNSS Data

Calculate change in
x, y, heading over delay time

Delay

EP 4 711 714 A1

# FIG. 7

Store driving path of vehicle based on
forward driving of vehicle — S700

Correct position of vehicle based on at least one of
sensor information measured by internal sensor of vehicle,
global positioning system (GPS) information of vehicle, or
feature information obtained through image
information of vehicle when vehicle drives backward — S701

Assist backward driving of vehicle based on stored
driving path and corrected position of vehicle — S702

Extract local map information within certain range from
current position of vehicle from entire map information
stored based on forward driving of vehicle — S703

Calculate position coordinate value of vehicle,
corresponding to delay time, based on forward driving of vehicle — S704

Compensate for at least one of GPS information or feature
information based on position coordinate value of vehicle — S705

# FIG. 8

Europäisches
Patentamt
European
Patent Office
Office européen
des brevets

## EUROPEAN SEARCH REPORT

**Application Number**

EP 25 18 7144

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 120 318 A (BAYERISCHE MOTOREN WERKE AG) 24 November 2023 (2023-11-24) | 1,4,9, 11,14,15 | INV. G01C21/16 |
| Y | * paragraphs [0003], [0007] - [0009], [0013], [0015], [0014], [0020] - [0021], [0029]; claims; figures * | 2,3,5-7, 10,12,13 | G01C21/28 B62D15/02 B62D1/02 |
| | ----- | | |
| Y | CN 111 174 782 B (ZHICHE YOUXING TECH (SHANGHAI) CO LTD) 17 September 2021 (2021-09-17) * paragraphs [[0057], [0058], [0115], [0127] - [0160]; claims; figures * | 2,3,12, 13 | |
| | ----- | | |
| X | DE 10 2013 015348 A1 (DAIMLER AG [DE]) 10 April 2014 (2014-04-10) * paragraphs [0024], [0025], [0034] - [0037], [0052], [0053]; claims; figures * | 1,4,8,9, 11,14,15 | |
| | ----- | | |
| Y | US 6 549 844 B1 (EGBERTS EGBERT [NL]) 15 April 2003 (2003-04-15) * column 4, lines 6-67; claims; figures * | 10 | |
| | ----- | | **TECHNICAL FIELDS SEARCHED (IPC)** |
| Y | CN 113 865 580 B (BEIJING YIHANG INTELLIGENT TECH CO LTD) 22 March 2024 (2024-03-22) * paragraphs [0204], [0234], [0235], [0254] - [0257], [0295]; claims; figures * | 5-7 | G01C B62D |
| | ----- | | |

The present search report has been drawn up for all claims

| Place of search | Date of completion of the search | Examiner |
|---|---|---|
| The Hague | 3 December 2025 | Ducher, Alban |

# EP 4 711 714 A1

## ANNEX TO THE EUROPEAN SEARCH REPORT
## ON EUROPEAN PATENT APPLICATION NO.

EP 25 18 7144

03-12-2025

| Patent document cited in search report | | Publication date | Patent family member(s) | | Publication date |
|---|---|---|---|---|---|
| CN 117120318 | A | 24-11-2023 | CN 117120318 A | | 24-11-2023 |
| | | | DE 102021110348 A1 | | 27-10-2022 |
| | | | EP 4326592 A1 | | 28-02-2024 |
| | | | US 2024182055 A1 | | 06-06-2024 |
| | | | WO 2022223227 A1 | | 27-10-2022 |
| CN 111174782 | B | 17-09-2021 | NONE | | |
| DE 102013015348 A1 | | 10-04-2014 | NONE | | |
| US 6549844 | B1 | 15-04-2003 | DE 19945124 A1 | | 26-04-2001 |
| | | | US 6549844 B1 | | 15-04-2003 |
| CN 113865580 | B | 22-03-2024 | NONE | | |